# EUROPEAN PATENT APPLICATION

(11) **EP 1 221 696 A2**
(43) Date of publication of application: **10.07.2002**
(21) Application number: 01130543.0
(22) Date of filing: 20.12.2001
(51) Int. Cl.: G11B 7/24, G11B 23/40

(54) **Disc for storage of digital and visual information**

(30) Priority: 27.12.2000 SE 0004853
(71) Applicant: Grönhaug, Stefan, 72350 Västeras (SE)
(72) Inventor: Grönhaug, Stefan, 72350 Västeras (SE)
(74) Representative: Reyier, Ann-Mari

(57) **Abstract**

The invention relates to a disc for storage of digital and visual information comprising a first layer (9) arranged to store optically readable information in digital form, a reflective layer (10) arranged to reflect light that passes the first layer. The disc comprises a second layer (13) which in comparison with the first layer (9) is arranged on the opposite side of the reflective layer (10) and is arranged to store visually readable information (7) in the form of signs and/or patterns, and that the disc is arranged to bring about the storage of both the digital and visual information by means of a CD-writer. The disc comprising a light absorbing layer (12), which is arranged between the reflective layer (10) and the second layer (13).

## Description

### TECHNICAL FIELD

The present invention relates to a disc for storage of digital and visual information comprising a first layer arranged to store optically readable information in digital form and a reflective layer arranged to reflect light that passes through the first layer.

The invention also relates to a method for storing of digital information and visual information on a disc.

The notion visual information shall be regarded in a broad meaning and comprise all types of signs and patterns that appear visually for the human eye. In particular, the notion comprises visual information, words, and pictures in various forms, which can describe the stored contents on the disc.

### PRIOR ART

It is well known to provide optically readable information by means of a medium in the form of a disc. Commercially available mini-discs, CD-ROM and CD discs are examples of storage media of this generally known type.

Such a disc comprises a layer that carries digital information in the form of changed properties on one surface of the layer. The digital information can be reproduced with, for example, a CD player or a CD-ROM reader that comprises a laser source.

When a bundle of laser beams from the laser source radiates the disc, the laser beams are reflected differently depending on the changes properties of the surface, that represents the digital information. Apart from the layer that carries the digital information, it is also known to arrange a reflective layer in such a disc. When the reflected layer is hit by the laser beams, the light is reflected back through the layer that carries the digital information and towards the reading unit.

One type of disc that is very common on the market today are recordable discs, for example CD-Rs. Digital information can be stored thereon through "burning" by means of a so-called CD-writer. By the notion CD-writer, a device is meant that comprises a laser unit for optical transmission and writing of digital information to a disc. The laser unit generates a laser beam that modifies a laser sensitive layer in the disc.

Conventional discs, onto which one can store digital information by means of a CD-writer and with which one can play the stored information with a CD-player or a CD-ROM-reader, have two opposite faces. One of these faces is intended to admit storage and optical reading and the other face is intended for marking through attachment of a label or Indian ink directly on a surface area of the face. The last mentioned face will, for simplicity reasons, in the following be called the marking face.

The marking face of a conventional, recordable disc is essentially free from visual information and it is thus possible for a user to provide the surface with desired information himself. It is common that the user wishes to mark his records in order to describe the contents in connection with the storage in order to visually distinguish between them. A common way to mark a disc is to write wanted information directly on the disc with a pen that can be of different types. Alternatively, one can write the information on an adhesive label, which is then applied on the disc. Apart form the fact that such a marking gives a poor impression, it carries a risk that the marking color of the pen or the adhesive substance of the label can act deteriorating to the disc. For discs being produced in a large number, the marking is usually accomplished by a so-called screen printing, such as on the recorded CD-discs one buys in a record store.

It is known to write visual patterns by means of a CD-writer on the layer of a disc which is intended to store the digital information. For example, the document EP 895 242 shows a data storage medium, such as a disc, where both digital and visual information are storable on a laser sensitive layer. The purpose of such a disc is that the storage of both the digital and the visual information shall be possible to accomplish with one and the same apparatus. The disc is however arranged to store the visual information on the same layer, which is intended for the digital information, but on different sections of the layer. This results in the fact that the disc cannot use its full capacity, since the storage capacity of the digital information must be reduced to give room for the visual information. A further disadvantage with such a disc is the fact that the available space for the visual information must be identified after the digital information has been stored so that the stored digital information is not ruined when the same layer must be modified again for storage of the visual information.

### SUMMARY OF THE INVENTION

One object of the present invention is to achieve a device for optical storage of information, partly in digital form and partly in visual form with reduced manufacturing costs in comparison to prior art and which does not show the disadvantages mentioned above. In particular, such a device is desired on which the information in both said forms can be stored by means of the same apparatus. Further, a device is desired that makes it possible to present the visual information with a sharp contrast.

This object is achieved with a disc of the previously described type, which is characterized in that it comprises a second layer, which is arranged relative to the first layer on the opposite side of the reflective layer and is arranged to store visually readable information in the form of signs and/or patterns, and that the disc is arranged to bring about the storage of both the digital and the visual information by means of a CD-writer. With such a disc, it is possible for a user to mark his discs in a simple way in connection with the storage of digital information. Due to the fact that the disc comprises said second layer, the need for using labels or marking pens for describing the contents of the disc according to the invention is eliminated. Today it is common that one has a CD-writer at home for writing on recordable discs for private purposes. The present invention makes it possible for a user to obtain an elegant and professional marking of his discs with a conventional CD-writer.

According to a preferred embodiment of the invention, said second layer is essentially of the same type of material as the first layer. Due to the usage of the same material type for both layers, conditions are created for manufacturing of a disc that permits storage of both digital and visual information with an increased cost efficiency in comparison to prior art. Primarily, the manufacturing of the second layer is simplified through the direct availability of required raw materials and machines for the manufacturing, since they are used for the manufacturing of the first layer.

According to a further embodiment of the invention, the disc comprises a light absorbing layer, which is arranged between the reflective layer and the second layer. With such a light absorbing layer, a high contrast is won between the areas that are covered with visual information and those that are not covered. Furthermore, the light absorbing layer makes it possible for the user to discern between the faces of the disc, since the disc is light absorbing at one face and reflective at the other. Thus, the risk for turning the disc wrongly in the CD-writer is reduced, which in such a case would lead to digital information being written on the marking face or vice versa. It is essential that the writing of respective information is done on the correct side of the disc, since the disc otherwise can be damaged so that it becomes useless.

According to a further embodiment of the invention, said light absorbing layer is colored. With the notion colored is meant any color including black and gray. The light absorbing layer can thus have different colors in different embodiments.

According to a further embodiment of the invention, said second layer is of such a type of material that, when an area thereof is exposed to a laser beam, this area transforms from a transparent state into an opaque state. Further, said light absorbing layer is preferably black. Through these embodiments, the marking face of the disc obtains a strongly prominent difference between the background and the signs or figures that are stored on said second layer. Thus, the disc according to the invention provides the defined visual information in a way which is sharp for an observer.

A further object with the present invention is to indicate a method for storing digital and visual information on a recordable disc in a simple way. This object is achieved through a method that permits storage of both digital and visual information on a disc with a CD-writer through the method comprising the steps that:
- digital information is stored by means of a CD-writer on a first face of the disc, and that
- visual information is stored by means of said CD-writer on a second face of the disc.

Further characteristics and advantages with the disc according to the invention will appear more clearly in the following detailed description.

### DESCRIPTION OF THE DRAWINGS

The present invention shall now be closer described with reference to different examples of embodiments and with reference to the appended drawings.
- Figure 1: shows a view in perspective of a disc according to the invention for storage of digital and visual information.
- Figure 2: shows a view of the disc according to the invention, where it is cut along a line A-A in Figure 1.
- Figure 3: shows an enlarged view of a section B of the disc in Figure 2, which view schematically illustrates the main layers that the disc comprises in one embodiment of the invention.

### DESCRIPTION OF EMBODIMENTS

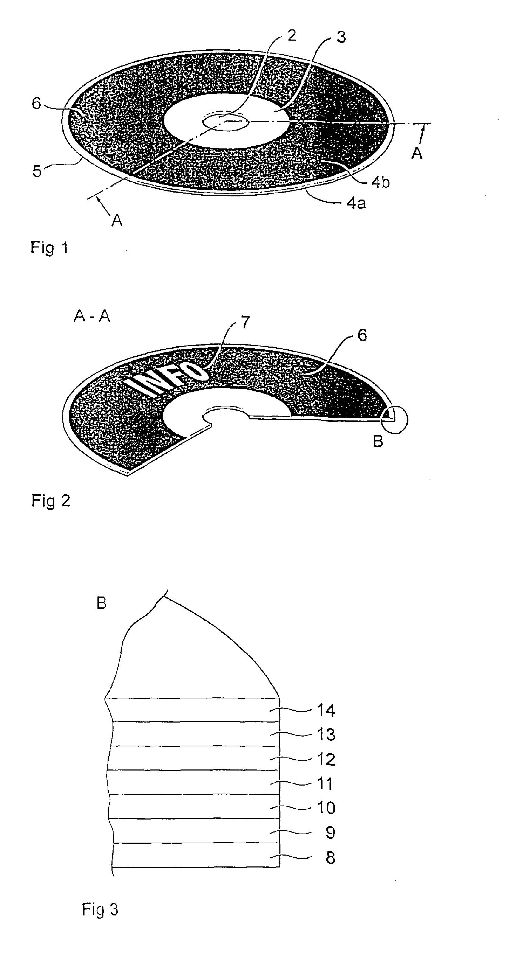

Figure 1 shows in perspective a disc according to the invention comprising a centrally arranged opening 2 in order to admit access for a driving unit to grip the disc during reading, a circularly shaped area 3 surrounding the opening, and a first and a second circular data area 4a, 4b on each side of the disc for storage of information. The disc is a data storage medium, which is arranged to be optically readable by means of a light source and an optical reading head in such a way that its digital information is reproduceable with, for example, a CD-player and/or a CD-ROM-reader.

As indicated in Figure 1, the disc has two opposite, centrally circular faces 5, 6 towards the environment. The disc according to the invention is arranged to admit storage of digital information on a first face 5 of them and visual information on the other face 6, the marking face. The data areas 4a, 4b for the storage of information are arranged between the planes of propagation of the faces 5, 6 and extend along essentially one of the planes of propagation. The disc according to the invention is arranged to make storage of both the digital and the visual information possible by means of the same apparatus, namely by means of a conventional CD-writer. The disc is arranged to cooperate with both its faces with the CD-writer in such a way that the storage is achieved from one direction each, i.e. the storage of the digital information is feasible from one direction and the storage of the visual information is feasible from the other direction. This is very advantageous, not in the least for users who write discs for private purposes, since the disc according to the invention makes it possible for users to mark their discs in connection with the storage of data in an inexpensive and simple way.

Figure 2 shows the disc with one piece removed in order to illustrate the construction of the disc. The disc according to the invention comprises a number of layers. As apparent from the enlarged example in Figure 3, the disc comprises in one preferred embodiment the following main layers in said order: a protective layer 8, a first layer 9 for storage of information, a reflective layer 10, an intermediary layer 11, a light absorbing layer 12, a second layer 13 for storage of information, and further a protective layer 14.

The protective layers 8, 14 are arranged to give stiffness and protection to underlying layers which are arranged between them. These layers 8, 14 are advantageously arranged to be durable against scratches. Preferably, they are made of a transparent material.

The first layer 9 for storage of information comprises said first data storage area 4a and is of such a type that it is affected when exposed to a laser light. When this laser sensitive layer 9 is radiated by laser light, optically readable changes are written in the layer 9 whose patterns 7 represent the digital information which the user intends to store. When radiating an area of the layer 9 in question with laser light, the radiated area is transformed from being transparent to being opaque in a dull and light color.

The reflective layer 10 is arranged for reflection of light that passes through the first layer 9. The playing of the digital information stored on the disc can be achieved by means of an optical reading device, such as a CD-player, whereby the reflected laser light is read by it. The reflected layer 10 can be made of gold or some other suitable metal.

The intermediary layer 11 is arranged to give steadiness to the disc so that it keeps its shape. Thus, the intermediary layer constitutes a supporting material. In the first embodiment, this supporting material does not necessarily need to be transparent. Eventually, the intermediary layer 11 can be omitted, if the reflective layer 10 is arranged with enough stiffness for the disc.

The light absorbing layer 12 is arranged so that incoming light is essentially not reflected. This layer 12 is colored and is preferably made in a dark color. The realization of the light absorbing layer 12 is of great significance for the production of the visual information which is stored in the second layer 13 and which shall be displayed on said marking face 6 of the disc. The light absorbing layer 12 is intended to constitute a contrasting background to the second layer 13 and in such a way complements the visual information which is intended to be supplied to the user.

The second layer 13 for storage of information comprises said second data storage area 4b and is arranged to carry the visual information. This second layer 13 for storage of information is arranged to store the visual information in such a way that it becomes visually available to the user. The visual information can be in the form of figures, pictures, signs, text, or other patterns 7 which can be apprehended by sight.

Said second layer 13 is arranged to be affectable by a conventional CD-writer and to obtain the visual information storage thereby. When no visual information is written on the layer 13, it is transparent. The layer 13 is of such a type that it is affected by exposure to a laser light. When this laser sensitive layer 13 is radiated with laser light, the layer is modified in such a way that a pattern 7 emerges. The layer 13 is of such a type of material that the area which the laser beam hits transforms from a transparent state to an opaque state. Such a material, for example a metal stabilized cyanine compound, or an azo-compound, exhibits a whitish, light shade in the opaque state. Since the light absorbing layer 12 is made in a dark color, for example black, and is arranged beneath said second layer 13, the transparent areas of said second layer 13 are apprehended as black by the eye, when they are seen from said marking face 6 of the disc as shown in Figure 1. Thanks to this cooperation between the underlying light absorbing layer 12 and said second layer 13, a strongly prominent difference between the areas which are opaque and those that are transparent. The black color of the underlying layer is covered by the light patterns 7 of signs and figures at said second layer 13, which is obtained during the writing. Thus, a negative picture is written, i.e. a light, whitish text against a black background, as shown in Figure 2. Thus, with laser light from a CD-writer one can write in and store desired text and pictures in the second layer 13.

Further, said second layer 13 can be carried out in other types of material with other characteristic properties. The layer 13 can, in another embodiment of the invention, be arranged so that it is degraded during the irradiation. Thus, a color from an underlying layer can emerge in the pattern 7 by the degraded areas so that the visual information is contrasted. Alternatively, the irradiated surface could be colored afterwards or by said second layer comprising a heat sensitive color which emerges on irradiated areas.

The invention also relates to a method for storage of partly digital information and partly visual information on a digital storage medium. The method according to the invention has its starting point from the disc according to the invention when it is empty, without information, i.e. when no information is stored either at the first layer 9 or at the second layer 13 for information storage. The method is unique in that it comprises the usage of a conventional CD-writer to write text and pictures on the disc. The method according to the invention implies that digital information, such as data files, are written on the first face 5 in the ordinary way, and that the disc is provided with visual information through turning the disc and by means of the CD-writer provide it with desired visible text and/or picture by writing on the second face 6 of the disc. The visual information is defined in a conventional computer, which is connected to the CD-writer. In the computer, a drive routine for the CD-writer is arranged. The drive routine is formed to admit treatment of the defined information intended for visualization and control of the CD-writer so that the intended pattern 7 is created on the disc.

It is emphasized that the embodiments discussed above and illustrated on the drawings are to be regarded as examples. The invention can thus be realized in other ways with perseverance of the basic idea of the invention. Especially, it should be noted that men skilled in the art, after having received knowledge of the solution according to the invention, of course are capable of performing different re-embodiments of the exemplified embodiments without leaving the frame of the patent protection.

For example, the disc can contain further layers in excess of said main layers. The order of the layers can also be changed. If said intermediary layer 11 for example is transparent, it can alternate in order with the light absorbing layer 12. The reflective layer 10 could also replace said intermediary layer 11, if the reflective layer 10 is arranged to be very steady.

## Claims

1. A disc for storage of digital and visual information comprising a first layer (9) arranged to store optically readable information in digital form, a reflective layer (10) arranged to reflect light that passes the first layer, a second layer (13) which in comparison to the first layer (9) is arranged on the opposite side of the reflective layer (10) and is arranged to store visually readable information in the form of signs and/or patterns, and that the disc is arranged to bring about the storage of both the digital and the visual information by means of a CD-writer, **characterized in that** the disc comprises a light absorbing layer (12) which is arranged between the reflective layer (10) and the second layer (13).

2. A disc according to claim 1, **characterized in that** said second layer (13) is of essentially the same type of material as the first layer (9).

3. A disc according to claim 1 or 2, **characterized in that** said second layer (13) is of such a type of material that when an area thereof is exposed to a laser beam, this area transforms from a transparent state to an opaque state.

4. A disc according to any of the claims 1-3, **characterized in that** said second layer (13) comprises metal stabilized cyanine or a cyanine compound.

5. A disc according to any of the claims 1-3, **characterized in that** said second layer (13) comprises AZO or an azo-compound.

6. A disc according to any of the claims 1-5, **characterized in that** said second layer (13) comprises a heat sensitive color which is arranged to emerge on the areas of the disc which said CD-writer affects.

7. A disc according to claim 1, **characterized in that** said light absorbing layer (12) is colored.

8. A disc according to any claim 1, **characterized in that** said light absorbing layer (12) is black.
